# EUROPEAN PATENT SPECIFICATION

(11) **EP 3 865 214 B1**
(45) Date of publication and mention of the grant of the patent: **07.12.2022**
(21) Application number: 21157736.6
(22) Date of filing: 17.02.2021
(51) Int. Cl.: A23N 1/02, B02C 7/14, B02C 13/284, B02C 13/28, B02C 7/04, B02C 13/06

(54) **IMPROVED OLIVE CRUSHER**
VERBESSERTER OLIVENZERKLEINERER
BROYEUR D'OLIVE AMÉLIORÉ

(30) Priority: 17.02.2020 IT 202000003173
(43) Date of publication of application: 18.08.2021
(73) Proprietor: EVP Systems S.r.l., 50041 Calenzano (FI) (IT)
(72) Inventor: BARONTI, Andrea, 50013 Campi Bisenzio (FI) (IT); BARONTI, Gabriele, 50013 Campi Bisenzio (FI) (IT); FAZIO, Domenico, 50127 Firenze (IT); FEDI, Alessandro, 50013 Campi Bisenzio (FI) (IT)
(74) Representative: Martini, Riccardo

(56) References cited:
- EP-A2- 1 479 302
- CN-A- 103 599 836
- IT-A1- RM 990 679
- US-A- 3 885 745
- US-A- 4 142 687

## Description

The present invention relates to an improved hammer crusher for extracting oil from olives.

The process of extracting oil from olives is known to include an olive crushing step, which is carried out by crushers of various types in which olives are ground into an oily paste.

A first type uses two mating rollers with the contacting parts formed with helical grooves, which rotate at low rpm and crush the olives.

The main problem with this type of olive crishers is low productivity.

A second type uses a rotating shaft having a horizontal or vertical axis, carrying cutting members (known as blades) cooperating with a cylindrical screen.

This type of crushers has the limit of reducing the extraction of chlorophylls from the skin and the consequent release of the green color into the oil.

A third type of crushers uses two metal disks of equal diameters, one stationary and the other rotating, having a series of mutually offset teeth with sharp edges: during operation olives are forced between the teeth and crushed. By adjusting the distance between the disks, the particle size of the paste obtained thereby is changed.

This type of crushers affords partial grinding of the skin and has limits in obtaining an optimal crushing degree.

In a fourth type of crushers, an impeller rotates inside a cylindrical perforated screen and has radial arms carrying at their ends generally parallelepipedal crushing members, known as hammers, oriented with a face substantially parallel to the plane tangent to the screen. Crushing is obtained by the impact of hammers on the olives which are pressed between the screen and the opposed face of the hammers. Current hammer crushers suffer from the drawback that the hammers have limited efficiency and are exposed to wear, thus requiring periodic replacement.

In addition, the high rotation speed of the hammers produces considerable emulsion and undesirably heats the paste. A hammer crusher for extracting oil from olives according the preamble of claim 1 is disclosed in document ITRM990679A1.

The main object of the present invention is to provide an improved hammer crusher, characterized by high efficiency and reduced hammer replacement frequency.

A second object is to provide a crusher that can combine disk- and hammer-based processing, for continuous, optimal processing of any type of olives, at any ripening stage.

In particular, an object of the invention is to provide a crusher that can provide pre-crushing using a disk system, and later crushing using a hammer system.

A further object is to provide a crusher in which, under the same flow rate conditions, the crushing members rotate at a controlled speed which is on average lower than that of the crushing members of currently available machines.

These objects are fulfilled by an olive crusher as defined in the appended claims. The technical features of invention will be more apparent from the following detailed description, referred to the accompanying drawings, which show one embodiment by way of exemplification and without limitation,:
- Fig. 1 shows an axonometric view of a preferred embodiment of an olive crusher according to the invention;
- FIG. 2 is a cross sectional view of the crusher of Fig. 1;
- Figs. 3 and 4 show an additional axonometric view and a front view of the crusher of Fig. 1, with the door of the crushing housing removed;
- Figs 5 to 8 show a further preferred embodiment of an olive crusher according to the invention.

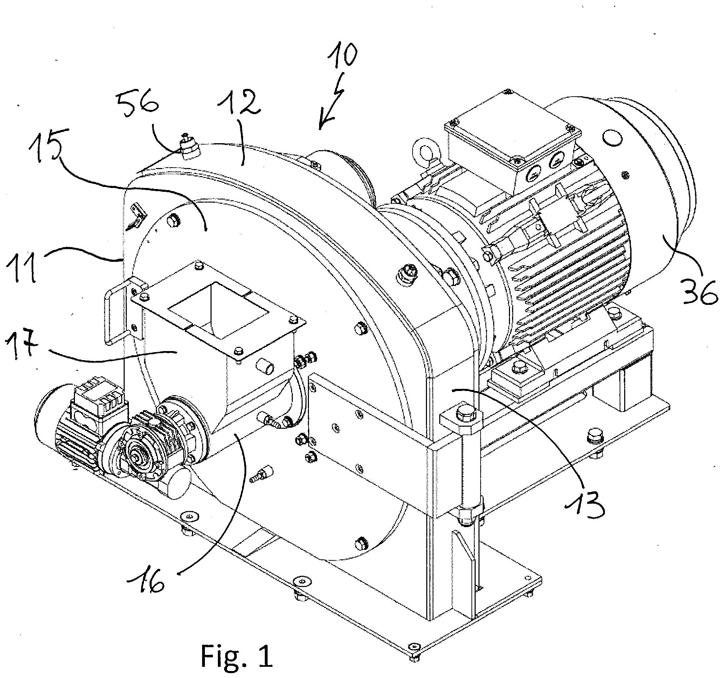

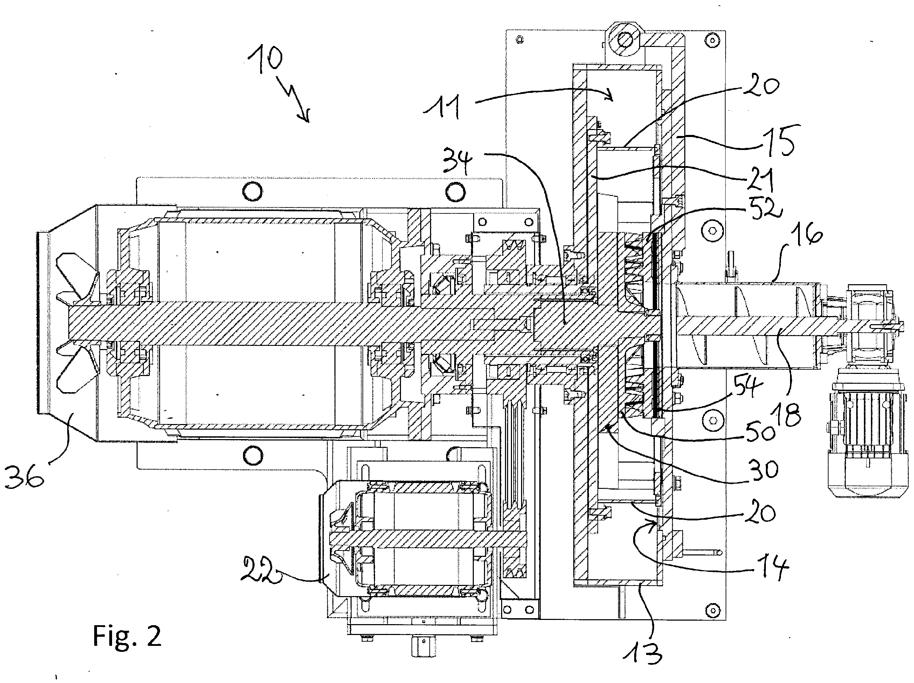

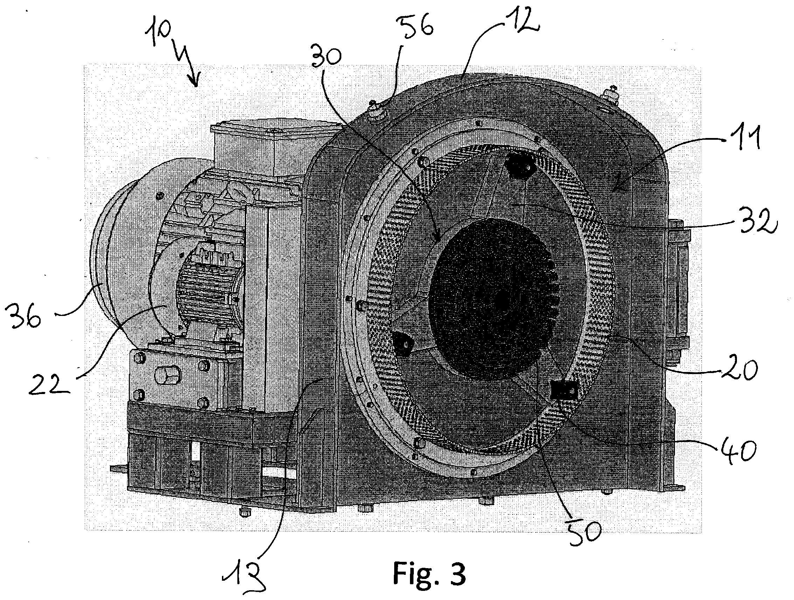

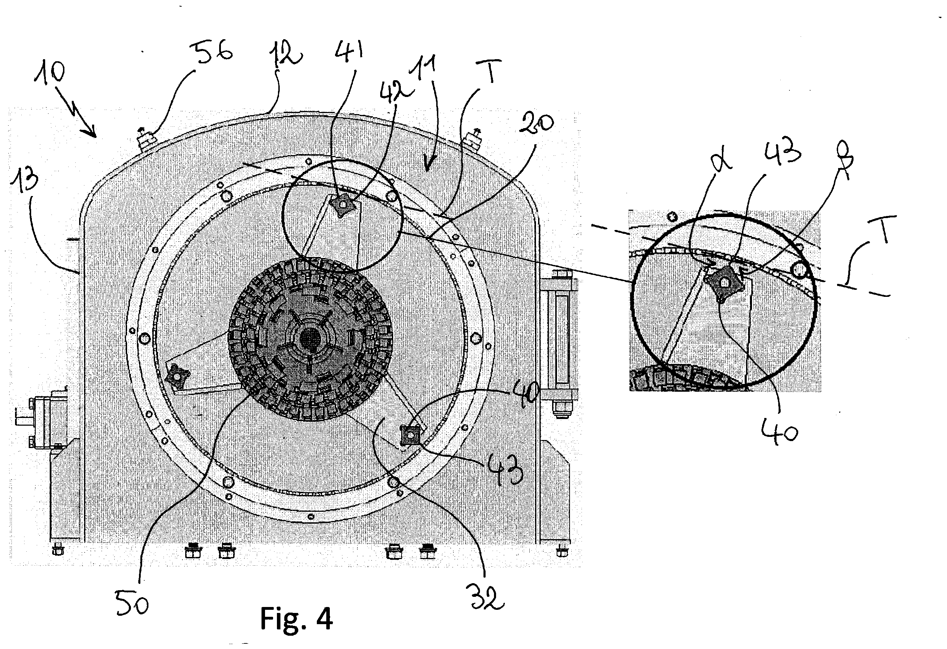

Referring to the accompanying Figures 1 to 4, an improved olive crusher 10 according to the invention comprises:
- a housing 11 in which olives are crushed, and which is delimited at its top and sides by walls 12, 13 and has a bottom opening for releasing the olive paste obtained by crushing and a front access opening 14;
- a door 15 for closing the front opening 14, which has a conduit 16 extending therethrough for introducing olives into the housing 11 via a hopper 17 and a motorized auger 18;
- an impeller 30, with three arms 32 in the example as shown in Figs. 2 and 3, rotated about a horizontal axis by a rotary shaft 34 driven by a first motor 36;
- a peripheral cylindrical screen 20, in the illustrated embodiment carried by a disk 21 coaxial with the impeller 30 and rotated, preferably in a direction opposite to that of the impeller, by means of a second motor 22 and known motion-transfer members (such as pulleys and belts);
- a plurality of crushing hammers 40, mounted to the ends of the arms 32 of the impeller 30 proximate to the screen 20.

According to the invention, the hammers 40 have a parallelepiped shape, advantageously with a square cross section, and each is oriented with two contiguous walls 41,42 forming angles α,β from 40° to 50°, preferably of 45° with respect to the tangent plane T that passes through the generatrix of the screen 20 that is closest to the hammer 40.

In other words, the hammers 40 are oriented with the edge 43 formed by the contiguous walls 41,42 held at a predetermined distance from the screen 20, such distance being the minimum distance between the hammer and the screen; whereas the walls 41,42 always form an angle with the plane tangent to the screen. Advantageously, the hammers 40 have a longitudinal through cavity for screw connection to the ends of the arms 43 of the impeller, which allows them to be easily rotated by 90° when worn and to be quickly replaced if needed.

In the preferred embodiment of the figures, a pair of opposed toothed disks 50,52, i.e. a rotating disk 50 and a stationary disk (52) are provided.

Namely, the rotating disk 50 is connected to the motorized shaft 34 and can rotate about the same axis as the impeller 30 that carries the hammers 40. On the other hand, the stationary disk 52 is mounted to the inner wall of the door 15. Interchangeable shims 54 are advantageously provided for adjusting the distance between the disks 50,52.

One or more nozzles 56 may be provided in the top wall of the housing 11 for pressurized feed of washing liquid.

In the olive crusher of this preferred embodiment, olives leave the crushing disks in an at least partially crushed state and are pushed toward the perforated screen 20 by the rotation of the rotating disk 50. The degree of crushing performed by the discs is adjusted by means of the shims 54.

As the crushing hammers 40 fixed to the ends of the arms 32 of the impeller 30 rotate, they grind the pre-crushed olives into an olive paste, which comes out of the lower portion of the housing 11 through the screen 20.

The dimensions of the holes of the screen are selected according to the target consistency of the paste.

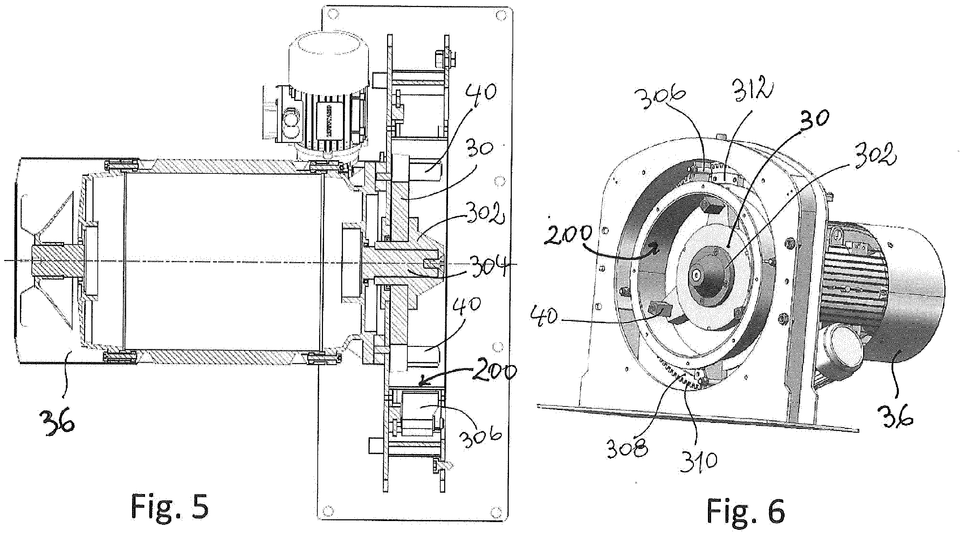

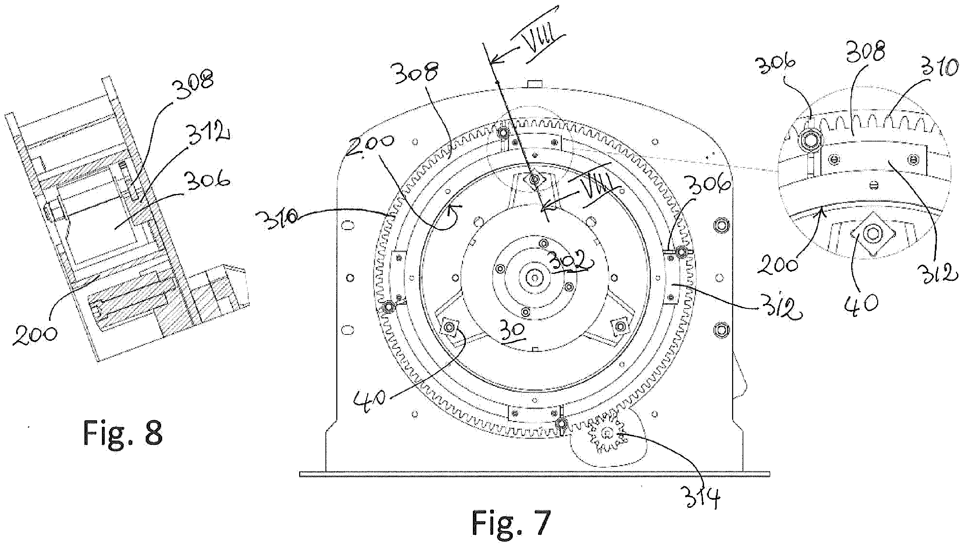

Figures 5 to 8 shown a particularly advantageous simplified embodiment of the olive crusher.

In particular, Figure 5 (in which the closing door, the olive feeding conduit, the hopper and the motorized auger have been omitted) shows that the cylindrical screen 200 is stationary, and no drive motor is thus associated therewith, and that the impeller 30 is driven by means of a flange 302 that is keyed to the shaft 304 of the first motor 36.

Also, a plurality of scraping blades 306 are provided, operating on the outer side of the screen 200. These blades are carried by a ring 308 having gears 310 and rotating on fixed supports 312 by means of a motorized pinion 314 (see Figs. 6-8). Experimental tests have shown the surprising effectiveness of the use of inventive hammers.

Further advantages are also obtained with another preferred embodiment of the olive crusher, which is also provided with toothed discs.

Such olive crusher has a highly flexible operation and is able to meet all the requirements arising during the oil campaign, to process olives of different species and with different ripening degrees.

This is afforded by the combination of pre-crushing using disks and finishing using hammers.

Furthermore, the crusher may be configured in the most appropriate manner before the desired processing, with or without crushing disks.

Also, a considerable advantage is that the particular shape of the hammers and the lower rotation speeds of the hammers/disks and of the counter-rotating screen (which may range from 900 to 1200 rpm and from 300 to 500 rpm respectively) as compared to prior art machines, can afford a delicate crushing effect, with no heating of the olive paste and no formation of paste emulsion.

## Claims

1. An olive crusher (10) comprising:
- a housing (11) in which olives are crushed, and which is delimited at its top and sides by walls (12, 13) and has a bottom opening for releasing the olive paste obtained by crushing and a front access opening (14);
- a door (15) for closing the front opening (14), which has a conduit (16) extending therethrough for introducing olives into the housing (11) via a hopper (17) and a motorized auger (18);
- an impeller (30) having a plurality of arms (32), rotated about a horizontal axis by a rotary shaft (34 ) driven by a first motor (36);
- a peripheral cylindrical screen (20,200);
- a plurality of crushing hammers (40), mounted to the ends of the arms (32) of the impeller (30) proximate to the screen (20,200);
**characterized in that** said hammers (40) have a parallelepiped shape and each is oriented with two contiguous walls (41,42) forming angles (α,β) from 40° to 50°, preferably of 45° with respect to the tangent plane (T) that passes through the generatrix of the screen (20) that is closest to the hammer (40).

2. A crusher as claimed in claim 1, wherein said hammers (40) have a square cross section.

3. An olive crusher as claimed in claim 1 or 2, wherein said hammers (40) have a longitudinal through bore for screw connection to the ends of the arms (43) of the impeller.

4. An olive crusher as claimed in any of the preceding claims, wherein said screen (20) is carried by a disk (21) coaxial with the impeller (30) and rotated preferably in a direction opposite to that of the impeller, by means of a second motor (22).

5. An olive crusher as claimed in any of the preceding claims, wherein a plurality of scraping blades (306) are designed to operate on the outer side of the screen (200), said blades being carried by a ring (308) having gears (310) and rotating on fixed supports (312) by means of a motorized pinion (314).

6. An olive crusher as claimed in any of the preceding claims, wherein a pair of opposed toothed disks 52), i.e. a rotating disk (50) and a stationary disk (52) are provided.

7. An olive crusher as claimed in claim 6, wherein said rotating disk (50) is connected to the motor-driven shaft (34) and is designed to rotate about the same axis as the impeller (30) that carries the hammers (40) and wherein said stationary disk (52) is mounted to the inner wall of the door (15).

8. An olive crusher as claimed in claim 7, wherein interchangeable shims (54) are provided for adjusting the distance between the disks (50, 52).

9. An olive crusher as claimed in any of the preceding claims, wherein one or more nozzles (56) are provided in the top wall of the housing (11) for pressurized feed of washing liquid.

## Patentansprüche

1. Ölpresse (10), umfassend:
- ein Gehäuse (10), in dem Oliven zerkleinert werden und das an seinem oberen Teil und an den Seiten durch Wände (12, 13) begrenzt ist und eine untere Öffnung zum Abführen der aus dem Zerkleinern erhaltenen Olivenpaste und eine vordere Zugangsöffnung (14) umfasst;
- eine Tür (15) zum Verschließen der vorderen Öffnung (14), durch die ein Kanal (16) ausgebildet ist, um Oliven mittels eines Trichters (17) und einer motorisierten Förderschnecke (18) ins Gehäuse (11) einzuführen;
- ein Schubelement (30) mit mehreren Armen (32), die um eine horizontale Achse mittels einer Drehwelle (34) gedreht werden, die von einem ersten Motor (36) angetrieben wird;
- einen peripheren zylindrischen Filter (20, 200);
- eine Vielzahl von Brechhämmern (40), die an den Enden der Arme (32) des Schubelements (30) in der Nähe des Filters (20, 200) angebracht sind;
**dadurch gekennzeichnet, dass** die Hämmer (40) die Gestalt eines Parallelepipeden haben und jeder von ihnen mit zwei angrenzenden Wänden (41, 42) ausgerichtet ist, die Winkel (α,β) zwischen 40° und 50°, vorzugsweise 45° in Bezug auf die Tangentialebene (T) bilden, die durch ddie Erzeugende des Filters (20) am nächsten zum Hammer (40) verläuft.

2. Ölpresse nach Anspruch 1, bei der die Hämmer einen normalen quadratischen Querschnitt aufweisen.

3. Ölpresse nach Anspruch 1 oder 2, bei der die Hämmer (40) eine durchgehende Längsbohrung für eine Schraubverbindung mit den Enden der Arme (43) des Schubelements aufweisen.

4. Ölpresse nach einem der vorangehenden Ansprüche, bei der der Filter (20) von einer Scheibe (21) getragen wird, die koaxial zum Schubelement (30) ist und vorzugsweise in einer Richtung gedreht wird, die der des Schubelements, mittels eines zweiten Motors (22), entgegengesetzt ist.

5. Ölpresse nach einem der vorangehenden Ansprüche, bei der mehrere Abstreifblätter (308) vorgesehen sind, die derart ausgebildet sind, um auf der Außenseite des Filters (200) zu arbeiten, wobei die Blätter von einem Ring (308) mit Zahnrädern (310) getragen werden und auf festen Trägern (312) mittels eines motorisierten Ritzels (314) drehen.

6. Ölpresse nach einem der vorangehenden Ansprüche, bei der ein Paar einander gegenüberliegender Zahnscheiben (52), d.h. eine rotierende Scheibe (50) und eine feststehende Scheibe (52), vorhanden sind.

7. Ölpresse nach Anspruch 6, bei der die rotierende Scheibe (50) mit der motorgetriebenen Welle (34) verbunden und dazu ausgelegt ist, um die gleiche Achse wie das die Hämmer (40) tragende Schubelement (30) zu rotieren und bei der die feststehende Scheibe (52) an der Innenwand der Tür (15) angebracht ist.

8. Ölpresse nach Anspruch 7, bei der zur Einstellung des Abstandes zwischen den Scheiben (50, 52) auswechselbare Beilagscheiben (54) vorgesehen sind.

9. Ölpresse nach einem der vorangehenden Ansprüche, bei der eine oder mehrere Düsen in die obere Wand des Gehäuses (11) ausgebildet sind, um eine Waschflüssigkeit unter Druck zuzuführen.

## Revendications

1. Presse pour huile (10), comprenant :
- un carter (10) dans lequel les olives sont broyées, et qui est délimité sur sa partie supérieure et sur les côtés par des parois (12, 13) et présente une ouverture inférieure pour évacuer la pâte d'olives issue du broyage et une ouverture d'accès frontale (14);
- une porte (15) pour fermer l'ouverture frontale (14), qui a un conduit (16) développé à travers d'elle pour introduire les olives dans le carter (11) au moyen d'une trémie (17) et d'une vis sans fin motorisée (18);
- un élément de poussée (30) ayant une pluralité de bras (32), mis en rotation autour d'un axe horizontal au moyen d'un arbre rotatif (34) entraîné par un premier moteur (36);
- un filtre cylindrique périphérique (20, 200);
- une pluralité de marteaux broyeurs (40), montés aux extrémités des bras (32) de l'élément de poussée (30) à proximité du filtre (20, 200);
**caractérisée en ce que** lesdits marteaux (40) ont une forme parallélépipédique et chacun d'eux est orienté avec deux parois contiguës (41, 42) qui forment des angles (α, β) compris entre 40° et 50°, de préférence de 45° par rapport au plan tangent (T) qui passe par la génératrice du filtre (20) la plus proche du marteau (40) .

2. Presse pour huile selon la revendication 1, dans laquelle lesdits marteaux (40) ont une section normale carrée.

3. Presse pour huile selon la revendication 1 ou 2, dans laquelle lesdits marteaux (40) ont un trou traversant longitudinal pour une liaison vissée avec les extrémités des bras (43) de l'élément de poussée.

4. Presse pour huile selon l'une des revendications précédentes, dans laquelle ledit filtre (20) est porté par un disque (21) coaxial à l'élément de poussée (30) et est de préférence entraîné en rotation dans un sens opposé à celui de l'élément de poussée, au moyen d'un deuxième moteur (22).

5. Presse pour huile selon l'une des revendications précédentes, dans laquelle une pluralité de lames racleuses (308) sont prévues pour opérer du côté externe du filtre (200), lesdites lames étant portées par un anneau (308) avec des engrenages (310) et tournant sur des supports fixes (312) au moyen d'un pignon motorisé (314).

6. Presse pour huile selon l'une des revendications précédentes, dans laquelle une paire de disques dentés opposés (52) sont prévus, c'est-à-dire un disque rotatif (50) et un disque fixe (52).

7. Presse pour huile selon la revendication 6, dans laquelle ledit disque rotatif (50) est relié à l'arbre motorisé (34) et est destiné à tourner autour du même axe que l'élément de poussée (30) qui porte les marteaux (40) et dans laquelle ledit disque fixe (52) est monté sur la paroi interne de la porte (15).

8. Presse pour huile selon la revendication 7, dans laquelle des cales interchangeables (54) sont prévues pour régler la distance entre les disques (50, 52).

9. Presse pour huile selon l'une des revendications précédentes, dans laquelle une ou plusieurs buses sont prévues dans la paroi supérieure du carter (11) pour fournir un liquide de lavage sous pression.
